(19) **Europäisches Patentamt European Patent Office Office européen des brevets**

(11) **EP 1 383 042 B1**

(12) **EUROPEAN PATENT SPECIFICATION**

(45) Date of publication and mention
of the grant of the patent:
**28.03.2007 Bulletin 2007/13**

(51) Int Cl.:
*G06F 9/38* (2006.01)

(21) Application number: **02425469.0**

(22) Date of filing: **19.07.2002**

(54) **A multiphase synchronous pipeline structure**

Eine mehrphasige synchrone Pipelinestruktur

Une structure de pipeline synchrone à phases multiples

(84) Designated Contracting States:
**DE FR GB IT**

(43) Date of publication of application:
**21.01.2004 Bulletin 2004/04**

(73) Proprietor: **STMicroelectronics S.r.l.**
**20041 Agrate Brianza (Milano) (IT)**

(72) Inventors:
• **Pappalardo, Francesco**
**I-95047 Paterno (CT) (IT)**
• **Pennisi, Agatino**
**84014 Nocera Inferiore (SA) (IT)**

(74) Representative: **Pezzoli, Ennio et al**
**c/o Maccalli & Pezzoli S.r.l.,**
**Via Settembrini, 40**
**20124 Milano (IT)**

(56) References cited:
**US-A- 5 392 423**        **US-A- 5 670 899**
**US-A- 6 122 751**

• **MOSHNYAGA V G ET AL: "Energy saving techniques for architecture design of portable embedded devices" ASIC CONFERENCE AND EXHIBIT, 1997. PROCEEDINGS., TENTH ANNUAL IEEE INTERNATIONAL PORTLAND, OR, USA 7-10 SEPT. 1997, NEW YORK, NY, USA,IEEE, US, 7 September 1997 (1997-09-07), pages 163-167, XP010243383 ISBN: 0-7803-4283-6**

**Description**

The present invention relates to a pipeline structure for use in a digital system.

A pipeline structure consists of a sequence of functional units (stages), which perform a task in several steps; the stages work in parallel thus giving higher throughput than if all the steps had to be completed before starting a next task. Pipelines are commonly used in several applications, for example, to process different parts of an instruction in a microprocessor.

Typically, the pipeline has a synchronous architecture. A synchronous pipeline receives a single clock signal, which controls all the stages. As a consequence, every stage must complete its work within one clock period.

A drawback of the synchronous pipeline is that all the stages switch at the same time. This involves high peaks of power consumption (due to the current absorbed by the short-circuits that are formed during the switching of the transistors of the logic gates, and to the current needed for charging and discharging wires and driven capacitors). These peaks of power consumption introduce sources of noise, which can jeopardise the functionality of a whole electronic device embedding the pipeline. Moreover, they impose several constrains in the design of a power supply structure; particularly, metal tracks used to supply the electronic device (when integrated in a chip of semiconductor material) must be dimensioned so as to withstand the aforementioned high peaks; as a consequence, an increased area of the chip is required to integrate the electronic device.

Asynchronous pipelines have also been proposed, in order to reduce the peaks of power consumption. In an asynchronous pipeline, all the stages proceed independently (so that they do not switch at the same time). A handshaking mechanism is then used to maintain every pair of adjacent stages in synchronisation. For this purpose, each stage generates a signal indicative of the completion of its work. This signal is used to move the result of the stage to a next stage, and then to trigger starting of the next stage.

However, the implementation of the handshaking mechanism is relatively complex. Moreover, an additional circuit is required to synchronise the flux of input and output information with the outside.

A different solution is described in US-A-6,122,751. This document proposes a pipelined circuit in which an initial and a final register are controlled by the same clock signal; the circuit further includes intermediate registers in which the data is stored at intermediate phases of the clock signal (while the data is kept in the initial register).

It is an object of the present invention to overcome the above-mentioned drawbacks. In order to achieve this object, a structure as set out in the first claim is proposed.

Briefly, the present invention provides a pipeline structure for use in a digital system including a plurality of stages arranged in a sequence from a first stage for receiving an input of the pipeline structure to a last stage for providing an output of the pipeline structure, at least one intermediate stage being interposed between the first stage and the last stage, wherein the first stage and the last stage are controlled by a main clock signal; the pipeline structure further includes phase shifting means for generating at least one local clock signal from the main clock signal for controlling the at least one intermediate stage, the main clock signal and the at least one local clock signal being out of phase.

Moreover, the present invention provides a digital system including this pipeline structure, and an electronic device including the digital system; a corresponding method of operating a pipeline structure is also encompassed.

Further features and the advantages of the solution according to the present invention will be made clear by the following description of a preferred embodiment thereof, given purely by way of a non-restrictive indication, with reference to the attached figures, in which:

Figure 1 is a schematic block diagram of a hand-held computer wherein the pipeline structure of the invention can be used;
Figure 2 illustrates the functional blocks of the pipeline; and
Figure 3 is a time diagram showing operation of the pipeline structure.

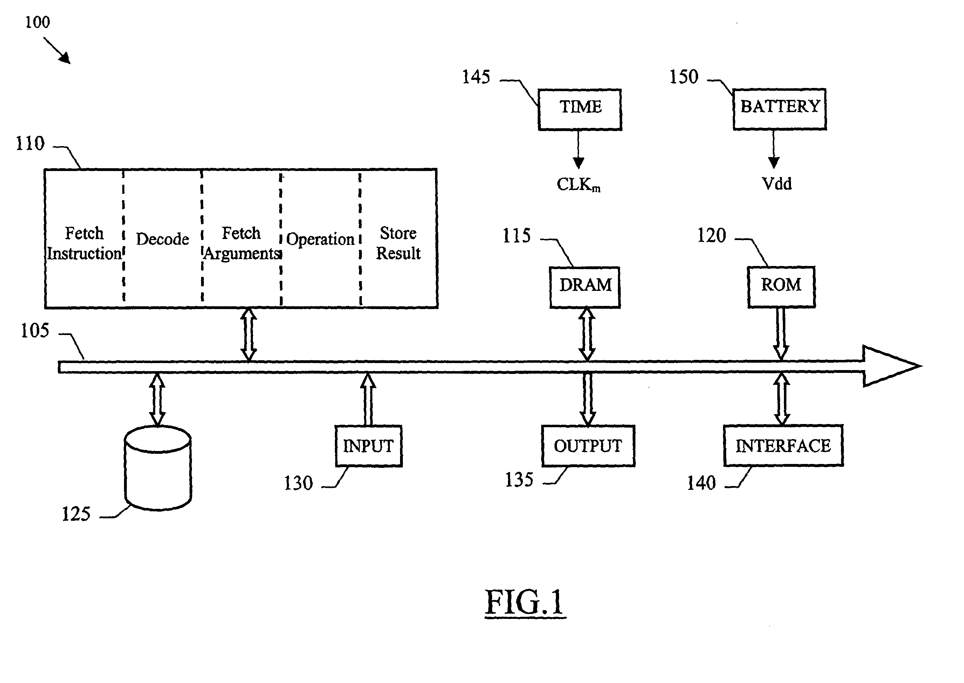

With reference in particular to Figure 1, a hand-held computer 100 is depicted. The hand-held computer 100, also known as palmtop, pocket computer or Personal Digital Assistants (PDA), consists of a very small system that literally fits in one hand. The hand-held computer 100 is formed by several units, which are connected in parallel to a communication bus 105. In detail, a microprocessor 110 controls operation of the hand-held computer 100, a DRAM 115 is directly used as a working memory by the microprocessor 110, and a Read Only Memory (ROM) 120 stores basic code for a bootstrap of the hand-held computer 100.

Several peripheral units are further connected to the bus 105. Particularly, a non-volatile memory 125, typically consisting of a flash $E^2PROM$, operates as a solid-state mass memory for the hand-held computer 100. Moreover, the hand-held computer 100 includes input devices 130 (for example, an electronic pen or stylus), and output devices 135 (for example, a flat panel screen made with a TFT technology). Interfaces 140 are used to connect external peripherals (such as a PCMCIA network card) to the hand-held computer 100.

A timing unit 145 generates a main clock signal $CLK_m$, which is used to synchronise operation of the hand-held computer 100. A battery pack 150 provides a power supply voltage Vdd for all the units of the hand-held computer 100, so as to enable the hand-held computer 100 to run without plugging it in.

The microprocessor 110 has a pipeline architecture, wherein a sequence of stages simultaneously processes different parts of every instruction to be executed by the microprocessor 110. Particularly, a first stage fetches the instruction (from the DRAM 115), a second stage decodes the instruction, a third stage fetches the respective arguments (if any), a fourth stage executes the operations required by the instruction, and a fifth stage stores a possible result. In this way, as one instruction is executed, the next instruction is being decoded and the one after that is being fetched. For maximum performance, the pipeline requires a continuous stream of instructions; therefore, this technique is commonly combined with instruction prefetch in an attempt to keep the pipeline busy.

Similar considerations apply if the hand-held computer has a different structure or includes other units (for example, an infrared port), if the pipeline is formed by a different number of stages, if no prefetch is implemented, if each stage performs other functions, and the like. Alternatively, the pipeline is used in the microprocessor of a laptop computer, in a mobile telephone, in a memory (wherein data is saved in a stack while next data is being accessed), or more generally in any other digital system.

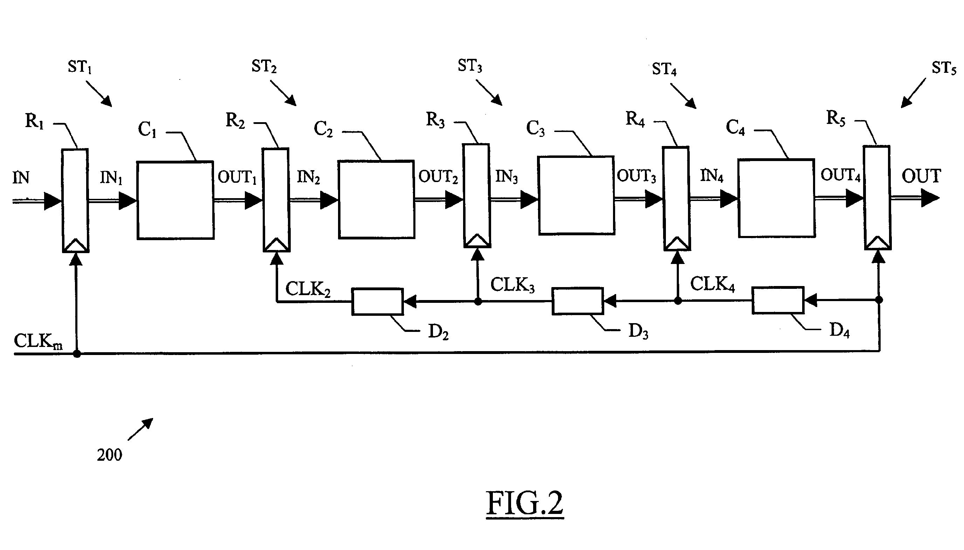

Considering now Figure 2, a structure 200 of the pipeline used in the microprocessor of the hand-held computer is depicted. The pipeline 200 is formed by N=5 stages $ST_i$ (with i=1...N). Each stage $ST_i$ includes a register $R_i$ and a combinatorial circuit $C_i$ (save for the last stage $ST_5$, which only has the register $R_5$ without any combinatorial circuit). The combinatorial circuit $C_i$ is cascade connected to the respective register $R_i$; the register $R_1$ (of the first stage $ST_1$) and the register $R_5$ (of the last stage $ST_5$) define an input and an output, respectively, of the pipeline 200.

An input word IN (for example, of 32 bits) received by the pipeline 200 is stored into the register $R_1$ (as a word $IN_1$). Each register $R_i$ (with the exception of the last one) operates as an input buffer for the respective combinatorial circuit $C_i$. The combinatorial circuit $C_i$ processes a word $IN_i$ provided by the register $R_i$, and generates a result consisting of a word $OUT_i$; the combinatorial circuit $C_i$ has a propagation time $P_i$ (defined as the delay for obtaining the word $OUT_i$ from the word $IN_i$). The output of the combinatorial circuit $C_i$ is then stored into the next register $R_{i+1}$ (so that $IN_{i+1}=OUT_i$). The word stored in the last register $R_5$ ($OUT_4$) is sent to the outside as an output word OUT of the pipeline 200.

Operation of the pipeline 200 is controlled by the main clock signal $CLK_m$. Particularly, each register $R_i$ has a control terminal, which is used to trigger loading of the word supplied to its input (word IN for the register $R_1$ and word $IN_i$ for the other registers $R_2$-$R_5$). The first register $R_1$ and the last register $R_5$ are controlled by the main clock signal $CLK_m$ directly. The other registers $R_2$-$R_4$ (of the intermediate stages $ST_2$-$ST_4$) are controlled by local clock signals $CLK_2$-$CLK_4$, respectively. The local clock signals $CLK_2$-$CLK_4$ are generated from the main clock signal $CLK_m$ using a phase shifting circuit. This circuit consists of a delay block $D_i$ for each intermediate stage $ST_i$. The block $D_i$ generates the corresponding local clock signal $CLK_i$ applying a pre-set delay $d_i$ to the clock signal controlling the next stage $ST_{i+1}$; in other words, the local clock signals $CLK_2$, $CLK_3$ and $CLK_4$ are generated delaying the clock signals $CLK_3$, $CLK_4$ and $CLK_m$, respectively. The delay blocks $D_2$-$D_4$ ensure that the main clock signal $CLK_m$ and every local clock signal $CLK_i$ are out of phase, so that the registers $R_1$-$R_5$ never switch at the same time.

Similar considerations apply if the pipeline includes a different number of stages (down to three), if the word consists of a different number of bits, if the registers are replaced with equivalent buffers, if a further combinatorial circuit is connected to the last register, if the first register is missing, and the like.

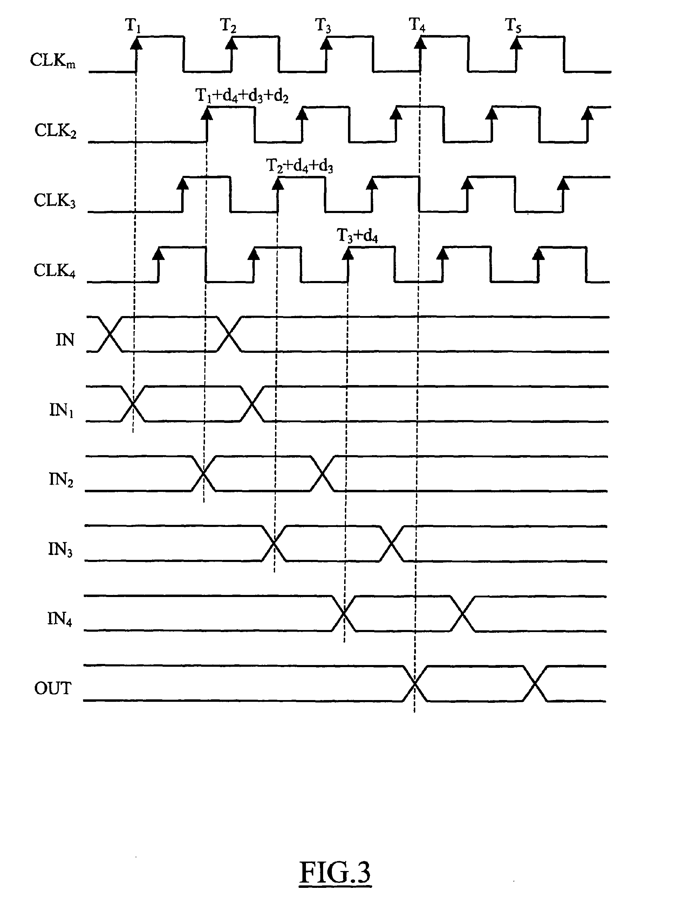

Operation of the pipeline described above is shown in the simplified time diagram of Figure 3. The various signals are switched at the rising edge of the respective clock signal ($CLK_m$, $CLK_2$-$CLK_4$); each word is represented by a band (the crossing points of the band define the switching times). The input word IN is loaded into the first register $R_1$ (word $IN_1$) at the time $T_1$ (in response to the raising edge of the main clock signal $CLK_m$). The word $IN_1$ is processed by the combinatorial circuit $C_1$; the output of the combinatorial circuit $C_1$ (word $OUT_1$) is stored into the second register $R_2$ (word $IN_2$) at the next rising edge of the local clock signal $CLK_2$ (time $T_1+d_4+d_3+d_2$). In a similar manner, the output of the combinatorial circuit $C_2$ (word $OUT_2$) is stored into the third register $R_3$ (word $IN_3$) at the next rising edge of the local clock signal $CLK_3$ (time $T_2+d_4+d_3$). The output of the combinatorial circuit $C_3$ (word $OUT_3$) is likewise stored into the fourth register $R_4$ (word $IN_4$) at the next rising edge of the local clock signal $CLK_4$ (time $T_3+d_4$). The word $IN_4$ is then processed by the combinatorial circuit $C_4$; the output of the combinatorial circuit $C_4$ (word $OUT_4$) is stored into the last register $R_5$ (providing the output word OUT) at the next rising edge of the main clock signal $CLK_m$ (time $T_4$). Therefore, three clock periods ($T_4$-$T_1$) are needed to pass through the entire pipeline (in order to get the output word OUT corresponding to the input word IN).

Correct operation of the pipeline requires that a new word cannot be written into a register before the previous one has been used (by the next combinatorial circuit). Particularly, a generic word $IN_i$ is supplied to the combinatorial circuit $C_i$ as soon as it is loaded into the corresponding register $R_i$. The combinatorial circuit $C_i$ generates the resulting word $OUT_i$ after the respective propagation time $P_i$. In order to ensure that the combinatorial circuit $C_i$ has completed its work before the word $OUT_i$ is stored in the next register $R_{i+1}$, the difference between the switching times of the registers $R_{i+1}$ and $R_i$ must be greater than the propagation time $P_i$ of the combinatorial circuit $C_i$.

Considering in particular the first stage $ST_1$, the register $R_1$ switches at every rising edge of the main clock signal $CLK_m$ (for example, $T_1$); the second register $R_2$ switches at the time $T_1 + d_4 + d_3 + d_2 = T_1 + \sum_{j=2}^{N-1} d_j$ . Therefore, the following relation must be met:

$$T_1 + \sum_{j=2}^{N-1} d_j - T_1 \geq P_1$$

$$\sum_{j=2}^{N-1} d_j \geq P_1$$

Denoting with $T_m$ the time of a generic raising edge of the main clock signal $CLK_m$, a register $R_i$ of any intermediate stage (from $ST_2$ to $ST_4$) switches at the time $T_m + \sum_{j=i}^{N-1} d_j$ ; the next register $R_{i+1}$ switches at the time

$$T_{m+1} + \sum_{j=i+1}^{N-1} d_j = T_m + T + \sum_{j=i+1}^{N-1} d_j$$ (where T is the period of the main clock signal $CLK_m$). Therefore, the restraint applicable to every intermediate stage is:

$$T_m + T + \sum_{j=i+1}^{N-1} d_j - (T_m + \sum_{j=i}^{N-1} d_j) \geq P_i$$

$$T - d_i \geq P_i$$

Finally, the register $R_4$ switches at the time $T_3+d_4$ and the register $R_5$ switches at the time $T_4=T_3+T$, so that the following condition must be met for the last stage:

$$T_3+T-(T_3+d_4) \geq P_4$$

$$T-d_4 \geq P_4$$

Similar considerations apply if a different timing is envisaged for the pipeline, if the signals are strobed after two or more clock periods from their switching, if the difference between the switching times of the adjacent registers is greater than the clock period, and the like.

More generally, the present invention proposes a pipeline structure for use in a digital system. The pipeline structure includes a plurality of stages arranged in a sequence from a first stage (for receiving an input of the pipeline structure) to a last stage (for providing an output of the pipeline structure); one or more intermediate stages are interposed between the first stage and the last stage. The first stage and the last stage are controlled by a main clock signal. In the pipeline structure of the invention, phase shifting means are provided for generating one or more local clock signals (from the main clock signal) for controlling the intermediate stages; the main clock signal and the local clock signals are out of phase.

The proposed solution strongly reduces the peaks of power consumption in the pipeline structure. In this way, less sources of noise are introduced. Moreover, the constraints in the design of a power supply structure of a whole electronic device embedding the pipeline are relaxed; particularly, metal tracks used to supply the electronic device (when integrated in a chip of semiconductor material) may be smaller; as a consequence, a reduced area of the chip is required to integrate the electronic device.

This result is achieved with a very simple architecture, without any handshaking mechanism among the stages of the pipeline.

In addition, the pipeline of the invention maintains a synchronous interface with the outside (for the flux of input and output information). Particularly, the proposed solution makes it possible to reduce the number of clock periods required to pass through the entire pipeline (compared with the synchronous pipeline known in the art), even if different timings are not excluded.

The preferred embodiment of the invention described above offers further advantages.

For example, the pipeline has multiple intermediate stages, each one controlled by a corresponding local clock signal (with all the local clock signals that are out of phase).

This feature further reduces the peaks of power consumption (since all the intermediate stages switch at different times).

Preferably, each local clock signal is obtained delaying the clock signal controlling an adjacent stage.

The proposed structure is very simple, but at the same time effective.

As a further enhancement, each delay block is input the clock signal of a next stage.

This solution makes it possible to ensure correct operation of the pipeline with shorter delays (than if the local clock signals were obtained from the previous stage).

Alternatively, the local clock signals are not all out of phase, two or more stages are controlled by the same local clock signal, the pipeline includes a single intermediate stage, each local clock signal is obtained delaying another clock signal (for example, the one controlling the previous stage), or different phase shifting means are envisaged.

Particularly, each intermediate stage includes a functional unit and a buffer; the functional unit has a propagation time lower than the phase difference between the corresponding clock signal and the clock signal controlling the next stage.

This structure better exploits the advantageous effects of the present invention (at the same time ensuring correct operation of the pipeline).

Preferably, each stage consists of a combinatorial circuit and a corresponding buffer (storing a word).

In this way, the peaks of power consumption are reduced to the minimum.

However, the solution according to the invention leads itself to be implemented in a pipeline wherein each register consists of a stack with a depth of two or more words, or even in a pipeline having a different architecture (for example, consisting of a simple shift register without any combinatorial circuit).

Typically, the pipeline of the invention is used in a digital system.

The improvement provided by the synchronous interface of the proposed pipeline is clearly perceived in a digital system of the synchronous type.

Moreover, the solution according to the present invention is particularly advantageous in an electronic device that is supplied by a battery (wherein the power consumption is a very critical issue).

However, the pipeline of the invention is also suitable to be used in a different digital system (even of the asynchronous type), and in any other electronic device (for example, supplied by mains electricity).

**Claims**

1. A pipeline structure (200) for use in a digital system (110) including a plurality of stages ($ST_i$) arranged in a sequence from a first stage ($ST_1$) for receiving an input of the pipeline structure to a last stage ($ST_5$) for providing an output of the pipeline structure, at least one intermediate stage ($ST_2$-$ST_4$) being interposed between the first stage and the last stage, wherein the first stage and the last stage are controlled by a main clock signal ($CLK_m$), the pipeline structure further including phase shifting means ($D_2$-$D_4$) for generating at least one local clock signal ($CLK_2$-$CLK_4$) from the main clock signal for controlling the at least one intermediate stage, the main clock signal and the at least one local clock signal being out of phase, **characterized in that** for each intermediate stage ($ST_2$, $S_T3$, $_ST4$) the phase shifting means includes a delay block ($D_2,D_3,D_4$) for obtaining the corresponding local clock signal ($CLK_2,CLK_3,CLK_4$) from the clock signal ($CLK_3,CLK_4$, $CLK_m$) controlling a next stage ($ST_3$, $ST_4$, $ST_5$) in the sequence.

2. The pipeline structure (200) according to claim 1, wherein each stage ($ST_1$-$ST_5$) has a predetermined propagation time and the main clock signal ($CLK_m$) has a predetermined period, and wherein each delay block ($D_2$-$D_4$) is adapted

to obtain the corresponding local clock signal ($CLK_2$-$CLK_4$) delaying the clock signal ($CLK_3$-$CLK_m$) controlling the next stage ($ST_3$-$ST_5$) by a delay at most equal to the period minus the corresponding propagation time, the sum of all the delays being at least equal to the propagation time of the first stage ($ST_1$).

3. The pipeline structure (200) according to claim 2, wherein the stages ($ST_1$-$ST_5$) are in a predetermined number and wherein the last stage ($ST_5$) provides the output corresponding to the input received by the first stage ($ST_1$) after a predetermined number of multiple periods, the number of periods being lower than the number of stages.

4. The pipeline structure (200) according to any claim from 1 to 3, wherein the at least one intermediate stage consists of a plurality of intermediate stages ($ST_2$-$ST_4$) each one controlled by a corresponding local clock signal ($CLK_2$-$CLK_4$), the local clock signals being out of phase.

5. The pipeline structure (200) according to any claim from 1 to 4, wherein each intermediate stage ($ST_1$-$ST_4$) includes a functional unit ($C_1$-$C_4$) cascade connected to a buffer ($R_1$-$R_4$), the buffer storing an output of the functional unit of a previous stage in the sequence responsive to the corresponding clock signal ($CLK_m$,$CLK_2$-$CLK_4$).

6. The pipeline structure (200) according to claim 5, wherein each functional unit consists of a combinatorial circuit ($C_1$-$C_4$) and each buffer consists of a register ($R_1$-$R_4$) for storing a word.

7. A digital system (110) including the pipeline structure (200) according to any claim from 1 to 6.

8. The digital system (110) according to claim 7, wherein the digital system if of the synchronous type.

9. An electronic device (100) including the digital system (110) according to claim 7 or 8, and a battery (150) for supplying the digital system (110).

10. A method of operating a pipeline structure (200) for use in a digital system (110) including a plurality of stages ($ST_i$) arranged in a sequence from a first stage ($ST_1$) for receiving an input of the pipeline structure to a last stage ($ST_5$) for providing an output of the pipeline structure, at least one intermediate stage ($ST_2$-$ST_4$) being interposed between the first stage and the last stage, wherein the method includes the steps of:

controlling the first stage and the last stage by means of a main clock signal ($CLK_m$),
generating at least one local clock signal ($CLK_2$-$CLK_4$) from the main clock signal, the main clock signal and the at least one local clock signal being out of phase,
controlling the at least one intermediate stage by means of the at least one local clock signal,

**characterized in that** for each intermediate stage ($ST_2$, $ST_3$, $ST_4$) the step of generating the corresponding local clock signal ($CLK_2$, $CLK_3$, $CLK_4$) includes delaying the clock signal ($CLK_3$, $CLK_4$, $CLK_m$) controlling a next stage ($ST_3$, $ST_4$, $ST_5$) in the sequence.

**Patentansprüche**

1. Pipelinestruktur (200) für die Verwendung in einem digitalen System (110), aufweisend eine Mehrzahl von Stufen ($ST_i$), die in einer Reihe von einer ersten Stufe ($ST_1$) für das Empfangen einer Eingabe der Pipelinestruktur bis zu einer letzten Stufe ($ST_5$) für das Liefern einer Ausgabe der Pipelinestruktur angeordnet sind, wobei mindestens eine Zwischenstufe ($ST_2$-$ST_4$) zwischen der ersten Stufe und der letzten Stufe eingefügt ist, wobei die erste Stufe und die letzte Stufe von einem Haupttaktsignal ($CLK_m$) gesteuert werden, wobei die Pipelinestruktur ferner eine Phasenschiebeeinrichtung ($D_2$-$D_4$) für das Erzeugen von mindestens einem lokalen Taktsignal ($CLK_4$-$CLK_4$) aus dem Haupttaktsignal für das Steuern der mindestens einen Zwischenstufe aufweist, wobei das Haupttaktsignal und das mindestens eine lokale Taktsignal phasenverschoben sind,
**dadurch gekennzeichnet, dass**
für jede Zwischenstufe ($ST_2$,$ST_3$,$ST_4$) die Phasenschiebeeinrichtung einen Verzögerungsblock ($D_2$, $D_3$, $D_4$) für das Erlangen des entsprechenden lokalen Taktsignals ($CLK_2$,$CLK_3$,$CLK_4$) aus dem Taktsignal ($CLK_3$,$CLK_4$,$CLK_m$) aufweist, das eine nächste Stufe ($ST_3$, $ST_4$, $ST_5$) in der Reihe steuert.

2. Pipelinestruktur (200) nach Anspruch 1, wobei jede Stufe ($ST_1$-$ST_5$) eine vorherbestimmte Ausbreitungszeit hat und das Haupttaktsignal ($CLK_m$) eine vorherbestimmte Periode hat und wobei jeder Verzögerungsblock ($D_2$-$D_4$) dafür

ausgebildet ist, das entsprechende lokale Taktsignal ($CLK_2$-$CLK_4$), das das Taktsignal ($CLK_3$-$CLK_m$) verzögert, das die nächste Stufe ($ST_3$-$ST_5$) steuert, durch eine Verzögerung, die höchstens gleich der Periode minus der entsprechenden Ausbreitungszeit ist, zu erlangen, wobei die Summe aller Verzögerungen mindestens gleich der Ausbreitungszeit der ersten Stufe ($ST_1$) ist.

**3.** Pipelinestruktur (200) nach Anspruch 2, wobei die Stufen ($ST_1$-$ST_5$) in einer vorherbestimmten Anzahl vorhanden sind und wobei die letzte Stufe ($ST_5$) die Ausgabe liefert, die der von der ersten Stufe ($ST_1$) empfangenen Eingabe nach einer vorherbestimmten Anzahl von mehrfachen Perioden entspricht, wobei die Anzahl der Perioden niedriger ist als die Anzahl der Stufen.

**4.** Pipelinestruktur (200) nach einem der Ansprüche 1 bis 3, wobei die mindestens eine Zwischenstufe aus einer Mehrzahl von Zwischenstufen ($ST_2$-$ST_4$) besteht, von denen jede von einem entsprechenden lokalen Taktsignal ($CLK_2$-$CLK_4$) gesteuert wird, wobei die lokalen Taktsignale phasenverschoben sind.

**5.** Pipelinestruktur (200) nach einem der Ansprüche 1 bis 4, wobei jede Zwischenstufe ($ST_1$-$ST_4$) eine Funktionseinheits ($C_1$-$C_4$)-Kaskade aufweist, die mit einem Puffer ($R_1$-$R_4$) verbunden ist, wobei der Puffer eine Ausgabe der Funktionseinheit einer vorhergehenden Stufe in der Reihe speichert, die auf das entsprechende Taktsignal ($CLK_m$, $CLK_2$, $CLK_4$) anspricht.

**6.** Pipelinestruktur (200) nach Anspruch 5, wobei jede Funktionseinheit aus einem Schaltnetz ($C_1$-$C_4$) besteht und jeder Puffer aus einem Register ($R_1$-$R_4$) für das Speichern eines Worts besteht.

**7.** Digitales System (110), aufweisend die Pipelinestruktur (200) nach einem der Ansprüche von 1 bis 6.

**8.** Digitales System (110) nach Anspruch 7, wobei das digitale System vom synchronen Typ ist.

**9.** Elektronische Vorrichtung (100), aufweisend das digitale System (110) nach Anspruch 7 oder 8 und eine Batterie (150) für die Versorgung des digitalen Systems (110).

**10.** Verfahren für das Betreiben der Pipelinestruktur (200) für die Verwendung in einem digitalen System (110), aufweisend eine Mehrzahl von Stufen ($ST_i$), die in einer Reihe von einer ersten Stufe ($ST_1$) für das Empfangen einer Eingabe der Pipelinestruktur bis zu einer letzten Stufe ($ST_5$) für das Liefern einer Ausgabe der Pipelinestruktur angeordnet sind, wobei mindestens eine Zwischenstufe ($ST_2$-$ST_4$) zwischen der ersten Stufe und der letzten Stufe eingefügt ist, wobei das Verfahren folgende Schritte aufweist:

Steuern der ersten Stufe und der letzten Stufe mittels eines Haupttaktsignals ($CLK_m$),
Erzeugung von mindestens einem lokalen Taktsignal ($CLK_2$-$CLK_4$) aus dem Haupttaktsignal, wobei das Haupttaktsignal und das mindestens eine lokale Taktsignal phasenverschoben sind,
Steuern der mindestens einen Zwischenstufe mittels des mindestens einen lokalen Taktsignals,

**dadurch gekennzeichnet, dass**
für jede Zwischenstufe ($ST_2$,$ST_3$,$ST_4$) der Schritt des Erzeugens des entsprechenden lokalen Taktsignals ($CLK_2$, $CLK_3$,$CLK_4$) die Verzögerung des Taktsignals ($CLK_3$,$CLK_4$,$CLK_m$) aufweist, das eine nächste Stufe ($ST_3$,$ST_4$,$ST_5$) in der Reihe steuert.

## Revendications

**1.** Structure pipeline (200) destinée à être utilisée dans un système numérique (110) incluant une pluralité d'étages ($ST_i$) agencés en une séquence à partir d'un premier étage ($ST_1$) pour recevoir une entrée de la structure pipeline vers un dernier étage ($ST_5$) pour fournir une sortie de la structure pipeline, au moins un étage intermédiaire ($ST_2$-$ST_4$) étant interposé entre le premier étage et le dernier étage, le premier étage et le dernier étage étant commandés par un signal d'horloge principal ($CLK_m$), la structure pipeline comprenant en outre un moyen de déphasage ($D_2$-$D_4$) pour produire au moins un signal d'horloge local ($CLK_2$-$CLK_4$) à partir du signal d'horloge principal pour commander ledit au moins un étage intermédiaire, le signal d'horloge principal et ledit au moins un signal d'horloge local étant non en phase ;
**caractérisée en ce que**, pour chaque étage intermédiaire ($ST_2$, $ST_3$, $ST_4$), le moyen de déphasage comprend un bloc de retard ($D_2$, $D_3$, $D_4$) pour fournir le signal d'horloge local correspondant ($CLK_2$, $CLK_3$, $CLK_4$) à partir du signal

d'horloge (CLK$_3$, CLK$_4$, CLK$_m$) commandant un étage suivant (ST$_3$, ST$_4$, ST$_5$) de la séquence.

**2.** Structure pipeline (200) selon la revendication 1, dans laquelle chaque étage (ST$_1$-ST$_5$) a une durée de propagation prédéterminée et le signal d'horloge principal (CLK$_m$) a une période prédéterminée, et dans lequel chaque bloc de retard (D$_2$-D$_4$) est adapté à fournir le signal d'horloge local (CLK$_2$-CLK$_4$) correspondant en retardant le signal d'horloge (CLK$_3$-CLK$_m$) commandant l'étage suivant (ST$_3$-ST$_5$) d'un retard au plus égal à la période moins la durée de propagation correspondante, la somme de tous les retards étant au moins égale à la durée de propagation du premier étage (ST$_1$).

**3.** Structure pipeline (200) selon la revendication 2, dans laquelle les étages (ST$_1$-ST$_5$) sont en nombre prédéterminé et dans laquelle le dernier étage (ST$_5$) fournit la sortie correspondant à l'entrée reçue par le premier étage (ST$_1$) après un nombre prédéterminé de périodes multiples, le nombre de périodes étant inférieur au nombre d'étages.

**4.** Structure pipeline (200) selon l'une quelconque des revendications 1 à 3, dans laquelle ledit au moins un étage intermédiaire comprend une pluralité d'étages intermédiaires (ST$_2$-ST$_4$) dont chacun est commandé par un signal d'horloge local correspondant (CLK$_2$-CLK$_4$), les signaux d'horloge locaux étant déphasés.

**5.** Structure pipeline (200) selon l'une quelconque des revendications 1 à 4, dans laquelle chaque étage intermédiaire (ST$_1$-ST$_4$) inclut un module fonctionnel (C$_1$-C$_4$) connecté en cascade avec un tampon (R$_1$-R$_4$), le tampon mémorisant une sortie du module fonctionnel d'un étage précédent de la séquence en réponse au signal d'horloge correspondant (CLK$_m$, CLK$_2$-CLK$_4$).

**6.** Structure pipeline (200) selon la revendication 5, dans laquelle chaque module fonctionnel comprend un circuit combinatoire (C$_1$-C$_4$) et chaque tampon comprend un registre (R$_1$-R$_4$) pour mémoriser un mot.

**7.** Système numérique (110) incluant la structure pipeline (200) selon l'une quelconque des revendications 1 à 6.

**8.** Système numérique (110) selon la revendication 7, dans lequel le système numérique est de type synchrone.

**9.** Dispositif électronique (100) incluant le système numérique (110) selon la revendication 7 ou 8 et une batterie (150) pour alimenter le système numérique (110).

**10.** Procédé d'actionnement d'une structure pipeline (200) pour utilisation dans un système numérique (110) incluant une pluralité d'étages (ST$_i$) agencés en une séquence à partir d'un premier étage (ST$_1$) pour recevoir une entrée de la structure pipeline vers un dernier étage (ST$_5$) pour fournir une sortie de la structure pipeline, au moins un étage intermédiaire (ST$_2$-ST$_4$) étant interposé entre le premier étage et le dernier étage, dans lequel le procédé comprend les étapes suivantes:

commander le premier étage et le dernier étage au moyen d'un signal d'horloge principal (CLK$_m$);
produire au moins un signal d'horloge local (CLK$_2$-CLK$_4$) à partir du signal d'horloge principal, le signal d'horloge principal et ledit au moins un signal d'horloge local étant déphasé ;
commander ledit au moins un étage intermédiaire au moyen dudit au moins un signal d'horloge local ;

**caractérisé en ce que**, pour chaque étage intermédiaire (ST$_2$, ST$_3$, ST$_4$), l'étape de génération du signal d'horloge local correspondant (CLK$_2$, CLK$_3$, CLK$_4$) inclut de retarder le signal d'horloge (CLK$_3$, CLK$_4$, CLK$_m$) en commandant un étage suivant (ST$_3$, ST$_4$, ST$_5$) de la séquence.

100

145 — TIME

150 — BATTERY

CLK_m

Vdd

110

| Fetch Instruction | Decode | Fetch Arguments | Operation | Store Result |

115 — DRAM

120 — ROM

105

125

130 — INPUT

135 — OUTPUT

140 — INTERFACE

<u>FIG.1</u>

FIG.2

FIG.3